# EUROPÄISCHE PATENTSCHRIFT

(11) **EP 2 965 067 B1**
(45) Veröffentlichungstag und Bekanntmachung des Hinweises auf die Patenterteilung: **09.09.2020**
(21) Anmeldenummer: 14707366.2
(22) Anmeldetag: 27.02.2014
(51) Int. Cl.: G01N 23/223, G01B 15/02

(54) **OPTISCHER SPIEGEL, RÖNTGENFLUORESZENZANALYSEGERÄT UND VERFAHREN ZUR RÖNTGENFLUORESZENZANALYSE**
OPTICAL MIRROR, X-RAY FLUORESCENCE ANALYSIS DEVICE, AND METHOD FOR X-RAY FLUORESCENCE ANALYSIS
MIROIR OPTIQUE, APPAREIL D'ANALYSE PAR FLUORESCENCE X ET PROCÉDÉ D'ANALYSE PAR FLUORESCENCE X

(30) Priorität: 07.03.2013 DE 102013102270
(43) Veröffentlichungstag der Anmeldung: 13.01.2016
(73) Patentinhaber: Helmut Fischer GmbH Institut für Elektronik und Messtechnik., 71069 Sindelfingen (DE)
(72) Erfinder: RÖSSIGER, Volker, VERSTORBEN (DE)
(74) Vertreter: Mammel und Maser
(86) Internationale Anmeldenummer: PCT/EP2014/053799
(87) Internationale Veröffentlichungsnummer: WO 2014/135429

(56) Entgegenhaltungen:
- DE-A1- 3 314 281
- GB-A- 2 095 960
- JP-B2- 3 883 153
- US-A- 4 406 015
- US-A1- 2005 069 092
- US-A1- 2009 190 722

## Beschreibung

Die vorliegende Erfindung betrifft einen optischen Spiegel, insbesondere für ein Röntgenfluoreszenzanalysegerät, sowie ein Röntgenfluoreszenzanalysegerät mit einer Röntgenquelle zur Bestrahlung der Probe mit Röntgenstrahlung, einem Röntgendetektor zur Messung von der Probe abgestrahlten Röntgenfluoreszenzstrahlung und einer Kamera zur Erzeugung einer optischen Abbildung der bestrahlten Stelle der Probe über einen schräg im Strahlengang der Röntgenquelle angeordneten optischen Spiegel. Außerdem betrifft die Erfindung ein entsprechendes Verfahren zur Röntgenfluoreszenzanalyse, insbesondere zur Bestimmung der Dicken dünner Schichten.

Die Röntgenfluoreszenzanalyse ist ein zerstörungsfreies Verfahren zur qualitativen und quantitativen Materialanalyse. Es beruht auf dem Prinzip, dass durch Bestrahlung einer Probe mit polychromatischer Röntgenstrahlung Elektronen aus den inneren Schalen der die Probe bildenden Atome herausgelöst werden. Die dabei entstehenden Löcher werden durch Elektronen aus den äußeren Schalen aufgefüllt. Bei diesen Übergängen entsteht charakteristische Fluoreszenzstrahlung im Röntgenbereich, die von einem Detektor aufgezeichnet wird und Aufschluss über die elementare Zusammensetzung der Probe gibt.

Die Röntgenfluoreszenzanalyse wird insbesondere auch zur Schichtdickenmessung dünner Schichten und Schichtsysteme eingesetzt. Da Röntgenstrahlung dünne Schichten durchdringt, wird auch im darunterliegenden Material Röntgenfluoreszenzstrahlung erzeugt, die wiederum auf ihrem Weg zum Detektor in darüberliegenden Schichten durch Absorption abgeschwächt wird. Durch Auswertung des Spektrums im Bereich der Wellenlängen von Röntgenstrahlung kann sowohl die Materialzusammensetzung als auch die vorhandene Schichtdicke bestimmt werden. Um eine gute räumliche Auflösung zu erreichen, wird der Messfleck, also der von der Primärstrahlung erfasste Bereich der Probe, meist recht klein gewählt.

Bei der Untersuchung von Proben mittels Röntgenfluoreszenzanalyse ist es erforderlich, den Messfleck über eine optische Abbildung der Probeoberfläche einzustellen. Dies erfolgt in der Regel durch eine Kamera. Um ein parallaxefreies Abbild einer Messstelle der Probe zu erzeugen, muss die Kontrollaufnahme aber möglichst parallel zum Röntgenstrahl aufgenommen werden. Hierzu wird unter einem Winkel ein optischer Spiegel im Strahlengang angeordnet, auf den die Kamera blickt. Damit der Spiegel den Röntgenstrahl auf seinem Weg zur Messstelle jedoch nicht absorbiert, besitzt dieser im Durchtrittsbereich des Röntgenstrahls ein Loch. Ein solcher optischer Spiegel ist aus der DE 33 14281 A1 bekannt. Dieser optische Spiegel hat jedoch den Nachteil, dass er in großer Entfernung von der Probenoberfläche angebracht sein muss, um ein ungestörtes Bild zu erzeugen.

Ein Röntgenfluoreszenzanalysegerät, bei dem zur Erzeugung einer Kontrollaufnahme ein Spiegel mit einem Loch zum Durchtritt des Röntgenstrahls eingesetzt wird, ist z.B. aus der DE 197 10 420 A1 bekannt. Bei der EP 1 348 949 B1 wird zudem eine fokussierende Röntgenoptik eingesetzt, die durch eine Aussparung im Kontrollspiegel hindurch geführt ist. Analoges ist aus der DE 32 39 379 C2 bekannt, welche einen Spiegel offenbart, bei welchem die Größe des Lochs zum Durchtritt des Röntgenstrahles einstellbar ist.

Aus der US 4,406,015 A sind des Weiteren ein Röntgenfluoreszenzanalysegerät sowie ein Verfahren zur Röntgenfluoreszenzanalyse bekannt, bei welchem im Primärstrahl ein Spiegel angeordnet ist, welcher eine auf einer SiO2-Platte aufgedampfte Aluminiumschicht oder auf einem Kunststofffilm eine aufgedampfte Aluminiumschicht aufweist. Der Spiegel umfasst somit eine vollflächige Aluminiumschicht auf einem vollflächigen, aus Kunststoff ausgebildeten Träger oder einer vollflächigen SiO2-Platte.

Beide Ausführungsformen weisen den Nachteil auf, dass diese vollflächigen Träger die Intensität der zum Messgegenstand gerichteten Röntgenstrahlung verringern, wodurch höhere Messzeiten erforderlich sind. Darüber hinaus weist die Ausführungsform mit dem aus Kunststoff bestehenden Träger den Nachteil auf, dass sich im Lauf der Zeit aufgrund der Bestrahlung mittels Röntgenstrahlung dieser Kunststoff zersetzt.

Aus der US 2009/0190722 A1 ist ein optischer Spiegel bekannt, der einen ringförmigen Rahmen umfasst, auf welchem ein optisch ebenes Häutchen aufgespannt ist, welches beispielsweise aus einer dünnen Kunststoffmembran besteht, die mit einer dünnen Metallschicht, wie beispielsweise Aluminium, beschichtet ist. Ein analoger Aufbau eines optischen Spiegels ist aus der JP 3883 153 B2 bekannt. GB2095960 offenbart ein verwandtes Röntgenfluoreszenzanalysegerät und Verfahren zur Röntgenfluoreszenzanalyse mit einem halbdurchlässigen Spiegel aus SiO₂ oder einem organischen Film mit einer Aluminium Beschichtung, wobei der Spiegel auf einem Träger gehaltert wird.

Die Aufgabe der Erfindung ist es, einen optischen Spiegel, ein Röntgenfluoreszenzanalysegerät sowie ein Verfahren zur Röntgenfluoreszenzanalyse dahingehend zu verbessern, dass naturgetreue Kontrollaufnahmen an der Messstelle der zu analysierenden Probe möglich sind und wenn sich diese in sehr kleinem Abstand zum Spiegel befindet.

Die Aufgabe wird durch die Merkmale der Ansprüche 7 und 10 gelöst. Vorteilhafte Ausgestaltungen sind den abhängigen Ansprüchen zu entnehmen.

Gelöst wird die Aufgabe durch einen optischen Spiegel, der ein Durchtrittsfenster für die Röntgenstrahlung aufweist, welches durch eine Aussparung im Träger und einer die Aussparung überdeckenden Folie, welche die Spiegelschicht bildet, gebildet ist. Ein solcher optischer Spiegel ist einerseits für die Röntgenstrahlung, insbesondere die Primärstrahlung der Röntgenstrahlung, mit einer hohen Intensität durchlässig, da nur die Folie durchstrahlt wird und für die optische Strahlung zur Erfassung einer Abbildung von der Oberfläche der Messstelle der Probe undurchlässig ist, so dass ein vollständiges Bild von der Messstelle durch eine Kamera erfassbar ist.

Durch einen solchen optischen Spiegel kann eine Miniaturoptik geschaffen werden, wodurch der Abstand zwischen einem Fokus auf der Probe und einer Röntgenoptik unter Beibehaltung der Positionen des optischen Spiegels für eine direkte Betrachtung der Probe gering gehalten werden kann. Dadurch wird ein kompakter beziehungsweise kleinbauender Aufbau eines Röntgenfluoreszenzgerätes erzielt.

Vorzugsweise wird die Folie aus einem Kunststoff, besonders bevorzugt aus Polyethylenterephthalat, hergestellt. Kunststoffe bestehen hauptsächlich aus Kohlenstoff mit einer Kernladungszahl von nur 6. Da die Röntgenabsorption eine sehr starke Abhängigkeit von der Kernladungszahl z des zu durchdringenden Materials aufweist (etwa ∼ z4), ist die Schwächung durch eine Kunststofffolie sehr gering. Aus Polyethylenterephthalat, kurz PET, lassen sich äußerst reißfeste Folien herstellen, insbesondere wenn eine solche Folie biaxial gereckt wird.

Um eine spiegelnde Beschichtung auf der Folie zu erhalten oder eine Spiegelschicht zu bilden, kann die Folie metallisiert werden. Eine Metallisierung kann beispielsweise durch Sputtern (Kathodenzerstäubung) oder Vakuumbedampfen auf einfache Weise hergestellt werden.

Vorzugsweise wird eine Spiegelbeschichtung aus Aluminium aufgebracht, da Aluminium von den für eine Verspiegelung in Betracht kommenden Metallen die niedrigste Kernladungszahl aufweist und sich außerdem sehr gut sputtern lässt.

Eine solche auf dem Träger aufgebrachte Folie kann äußerst dünn, zum Beispiel mit einer Stärke von nur wenigen Mikrometern ausgeführt werden, so dass die primäre Röntgenstrahlung, deren Absorption exponentiell zur Dicke des zu durchdringenden Materials abhängt, kaum geschwächt wird.

Damit ein formstabiler optischer Spiegel erhalten wird, besitzt der Träger einen flächenförmigen Grundkörper, der vorzugsweise aus Glas besteht, welcher im Bereich des Durchtrittsfensters eine Aussparung, vorzugsweise ein rundes Loch, aufweist. Die verspiegelte Folie wird erfindungsgemäß auf den Träger aufgeklebt, wobei die Klebestellen beispielsweise nur im Randbereich vorgesehen werden brauchen.

Durch das Aufkleben der Folie auf dem Träger kann eine spannungsfreie Anordnung der Folie im Bereich der Aussparung im Träger erzielt werden. Somit ist im Bereich der Durchdringung des Spiegels nur die Folie wirksam, die jedoch kaum einen Identitätsverlust der Röntgenstrahlung hervorruft.

Die der Erfindung zugrunde liegende Aufgabe wird des Weiteren durch ein Röntgenfluoreszenzanalysegerät gelöst, bei dem ein optischer Spiegel entsprechend den unabhängigen Ansprüchen 1 - 6 nit einem Durchtrittsfenster für die Röntgenstrahlung eingesetzt wird, welcher einen Träger mit einer Aussparung umfasst, die an einer Außenseite des Trägers mit einer die Spiegelschicht bildenden Folie überdeckt ist.

Dadurch kann von der Messstelle der Probe eine optische Abbildung erfasst werden, welche zur Kontrolle der Messung ausgewertet werden kann.

Als Kamera kann vorzugsweise ein Endoskop, beispielsweise ein Videoendoskop, eingesetzt werden. Durch die damit erzielte kompakte Bauform wird eine fokussierende Röntgenoptik eingesetzt und sehr nah an die Probenoberfläche positioniert. Hierdurch wird eine sehr gute räumliche Auflösung erreicht.

Bevorzugt wird vor den Spiegel in Strahlrichtung gesehen eine Mono- oder Polykappilarlinse positioniert um den Primärstrahl zu fokussieren und einen kleineren Messfleck auf der Messoberfläche zu erzielen.

Die der Erfindung zugrunde liegende Aufgabe wird des Weiteren durch ein Verfahren zur Röntgenfluoreszenzanalyse einer Probe gelöst, bei der ein optischer Spiegel einen Träger mit einem Durchtrittsfenster, wie beispielsweise eine Durchbrechung oder Aussparung, für die Röntgenstrahlung aufweist, welches an einer Außenseite des Trägers von einer eine Spiegelschicht bildenden Folie überdeckt ist, so dass nur die Folie des optischen Spiegels von einer Röntgenstrahlung durchdrungen und ein vollständiges und verzerrungsfreies optisches Bild von der Messstelle beziehungsweise Probenoberfläche der Probe an der als Spiegelschicht ausgebildeten Folie reflektiert und von der Kamera erfasst wird. Dadurch kann eine verbesserte Auswertung und Überwachung der Messung an der Messstelle der Probe erzielt werden. Zudem ist ein Verfahren der Probe zwischen einem Röntgenstrahl und benachbart dazu positionierten Spiegel zur Erfassung einer vollständigen Abbildung der Messstelle der Probe nicht erforderlich. Da der optische Spiegel als kleinbauende Optik ausgebildet sein kann und zwischen der Röntgenstrahlung und der Messstelle bei einer Messung verbleiben kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichpnungen zu entnehmenden Merkmale können einzeln für sich oder zu mehreren in beliebiger Kombination erfindungsgemäß angewandt werden. Es zeigen:
Figur 1 eine schematische Darstellung eines Röntgenfluoreszenzanalysegerätes mit einem erfindungsgemäßen optischen Spiegel,
Figur 2 eine isometrische Ansicht eines nicht erfindungsgemäßen optischen Spiegels i
Figur 3 eine isometrische Ansicht eines nicht zur Erfindung gehörigen optischen Spiegels.

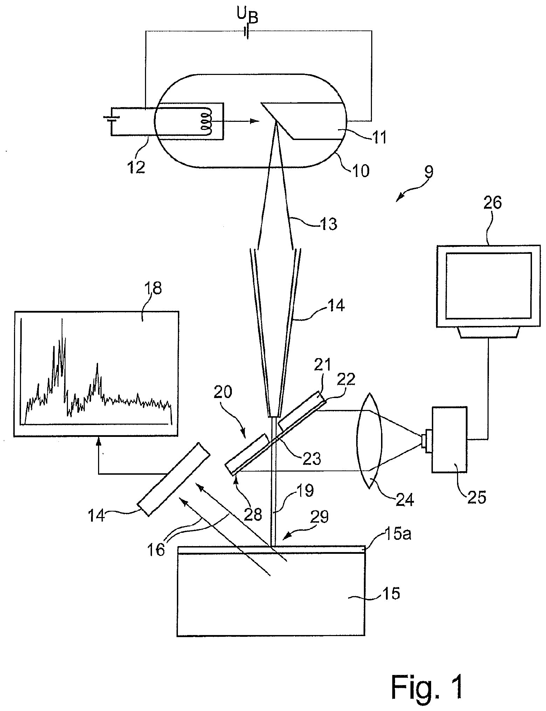

Das in Figur 1 gezeigte Röntgenfluoreszenzanalysegerät 9 besitzt als Röntgenquelle eine Röntgenröhre 10 üblicher Bauweise mit einer Glühkathode 12, von welcher Elektronen emittiert und durch eine angelegte Beschleunigungsspannung UB gegen eine Anode 11 beschleunigt werden. Dort werden die Elektronen abgebremst und erzeugen Röntgenstrahlung 13. Der Wellenlängenbereich der polychromatischen Röntgenstrahlung 13 hängt von der Beschleunigungsspannung UB, welche typischerweise im Bereich einiger 10 kV, z.B. im Ausführungsbeispiel bei 50 kV, liegt, und dem Anodenmaterial, beispielsweise Wolfram, ab.

Die Röntgenstrahlung 13 wird dann vorzugsweise durch eine Röntgenoptik 14, welche im Ausführungsbeispiel durch eine Mono- oder Polykapillarlinse gebildet wird, fokussiert. Alternativ kann auch nur ein einfacher Kollimator zum Ausblenden eines Strahlenbündels 19 eingesetzt werden.

Das ausgeblendete oder fokussierte Strahlenbündel 19 trifft dann auf eine Probe 15. Die Probe 15 umfasst beispielsweise eine Schicht 15a oder ein Schichtsystem. Das Strahlenbündel 19 dringt zumindest teilweise in die Schicht 15a ein oder durch die obere Schicht 15a oder das Schichtsystem der Probe 15 hindurch. In dem bestrahlten Bereich wird Röntgenfluoreszenzstrahlung 16 erzeugt, die von einem Röntgendetektor 17, beispielsweise einem Halbleiterdetektor, gemessen wird. Durch eine Auswertung eines gemessenen Energiespektrums 18 der Röntgenfluoreszenzstrahlung 16 auf an sich bekannte Weise kann die Materialzusammensetzung der Probe 15 und/oder die Schichtdicke der Schicht(en) 15a oder des Schichtsystems bestimmt werden.

Gleichzeitig ermöglicht das Röntgenfluoreszenzanalysegerät eine direkte Videobeobachtung der Probenoberfläche an der Messstelle 29. Dies dient zur Kontrolle und vereinfacht beispielsweise die Positionierung der Probe 15 zur Messposition. Außerdem kann so zu jeder Röntgenfluoreszenzmessung eine optische Kontrollaufnahme des beprobten Bereichs beziehungsweise der Messstelle 29 gespeichert werden, um so später einwandfrei die Lokalisation der Messstelle 29 nachvollziehen zu können.

Damit eine parallaxefreie Kontrollaufnahme erzeugt werden kann, wird die Bildaufnahme von der Messstelle 29 parallel zu dem Röntgenstrahl 19 aufgenommen. Hierzu ist unter einem Winkel ein optischer Spiegel 20 im Strahlengang angeordnet. Eine Abbildungsoptik, hier eine Linse 24, bildet das Spiegelbild der Probenoberfläche der Messstelle 29 auf eine Kamera 25, beispielsweise eine digitale CCD-Kamera, ab. Bevorzugt ist eine Endoskop-Kamera vorgesehen, die kleine Abmessungen aufweist und in einem kurzen Abstand zum optischen Spiegel positionierbar ist. Das Bild der Kamera 25 wird auf einem Monitor 26 dargestellt und kann mit einem Messdatensatz abgespeichert und ausgewertet werden.

Damit der optische Spiegel 20 den Röntgenstrahl 13 möglichst wenig schwächt, hat dieser ein Durchtrittsfenster 30 für den Röntgenstrahl 13. Dieses Durchtrittsfenster 30 ist durch eine Aussparung 23 im Träger 21 gebildet, welche auf einer Seite des Trägers 21 von einer durchgehenden Folie 22 als Spiegelschicht 28 überdeckt ist. Die Außenseite der Folie 27 ist verspiegelt. Der Träger 21 ist mit dieser verspiegelten Außenseite der Folie 22 zur Messstelle 29 geneigt ausgerichtet, so dass die Röntgenstrahlung 13 zunächst in die Aussparung 23 des Trägers 21 eintritt und hindurchtritt sowie anschließend die Folie 22 durchdringt oder durch die Folie 22 hindurchtritt. Der Träger 21 besteht vorzugsweise aus Glas.

Die Absorption von Röntgenstrahlung weist einerseits eine exponentielle Abhängigkeit von der zu durchdringenden Materialstärke, anderseits eine sehr starke Abhängigkeit proportional zur vierten Potenz der Kernladungszahl Z des durchdrungenen Materials auf. Als Trägermaterial für den Spiegel 20 kann zwar Glas zum Einsatz kommen (Silizium hat eine Kernladungszahl von 14), jedoch kann der Röntgenstrahl 13 durch die Aussparung 23 ungehindert hindurchtreten.

Auf der zur Kamera 25 zugewandten Unterseite des optischen Spiegels 20 befindet sich eine durchgehende, dünne Folie 22, vorzugsweise aus Kunststoff. Die Kunststoffe bestehen im Wesentlichen aus Kohlenstoff, welcher eine Kernladungszahl von 6 hat. Darüber hinaus können Kunststofffolien äußerst dünn, im Bereich weniger Mikrometer, dennoch aber sehr widerstandsfähig und reißfest, gefertigt werden. Ein bevorzugter Kunststoff zur Herstellung der Folie 22 ist Polyethylenterephthalat, kurz PET. Insbesondere biaxial orientierte Polyester-Folien aus PET, welche unter den Bezeichnungen Mylar, Melinex oder Hostaphan bekannt sind, eignen sich für den erfindungsgemäßen Einsatz.

Zur Verspiegelung wird die Kunststofffolie 22 metallisiert, indem beispielsweise durch Sputtern (Kathodenzerstäubung) oder Vakuumbedampfung eine spiegelnde Metallbeschichtung auf die Folie aufgebracht wird. Wegen der möglichst kleinen Kernladungszahl eignet sich als Beschichtungsmaterial besonders Aluminium (Kernladungszahl 13), welches sich auch noch besonders gut Sputtern lässt.

Metallisierte PET-Folien, die für die vorliegende Verwendung geeignet sind, weisen eine typische Materialstärke von beispielsweise weniger als 100 µm auf und haben eine hohe Reißfestigkeit. Die Dicke der spiegelnden Metallbeschichtung kann bei weniger als 100 nm liegen. Aufgrund der äußerst geringen Materialstärke der metallisierten Folie 22 und deren niedrigen Kernladungszahl ist sie für Röntgenstrahlung 13 annähernd durchsichtig. Es gelingt damit also, einen durchgehenden optischen Spiegel 20 mit für Röntgenstrahlung 13 annähernd durchsichtigem Durchtrittsfenster 30 zu schaffen.

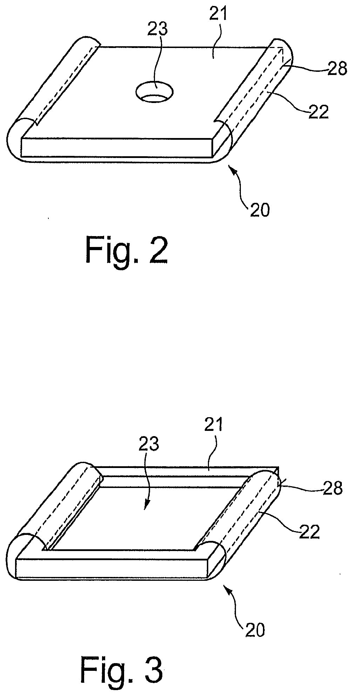

Die Folie 22 ist erfindungsgemäß auf den flächigen Grundkörper des Trägers 21 aufgeklebt. Die Klebestellen können dabei auf den Randbereich des Trägers 21 beschränkt sein. In Figur 2 wird ein nicht erfindungsgemäßer Spiegel 20 beispielhaft gezeigt. Der Träger 21 hat als Durchtrittsfenster 30 ein rundes Loch, durch welches ein Röntgenstrahl 13 hindurchtreten kann. Auf einer Außenseite des Trägers 21 ist die Folie 22 aufgespannt und überdeckt das Loch 23.

Anstelle eines Trägers 21 aus einer Glasplatte mit rundem Loch kann der Träger 21 auch nicht erfindungsgemäß als lediglich ein rechteckiger Rahmen ausgeführt werden, über den die Folie 22 gespannt wird. Ein solches nicht erfindungsgemäßes Beispiel nit einem Rahmen 21 als Träger ist beispielhaft in Figur 3 gezeigt. Diese Ausführungsform hat den Vorteil, dass ein größerer Bereich als Durchtrittsfenster 30 zur Verfügung steht, so dass die Röntgenoptik zum Abscannen der Messstelle 29 relativ zur Probe 15 bewegt werden kann, anstatt die Probe 15 unter der Röntgenoptik 14 zu verschieben.

Der Abstand zwischen der Röntgenoptik 14 und der Probe 15 beträgt im Ausführungsbeispiel etwa 15 mm. Größere Abstände sind möglich, führen jedoch zu einer schlechteren Fokussierung des Röntgenstrahls 13 und damit einer schlechteren räumlichen Auflösung des Röntgenfluoreszenzanalysegerätes 9. Wegen der kleinen Abmessungen eignet sich besonders ein Videoendoskop, bei dem Abbildungsoptik 24 und Digitalkamera 25 in Form eines Endoskops integriert sind.

## Patentansprüche

1. Optischer Spiegel für ein Röntgenfluoreszenzanalysegerät mit einer Röntgenquelle (10) zur Bestrahlung einer Probe (15) mit Röntgenstrahlung (19), einem Röntgendetektor (17) zur Messung von der Probe abgestrahlter Röntgenfluoreszenzstrahlung (16) und einer Kamera (25) zur Erzeugung einer optischen Kontrollabbildung (26) der bestrahlten Messstelle (29) einer Probe (15) über den schräg im Strahlengang der Röntgenquelle (10) angeordneten optischen Spiegel (20), wobei der optische Spiegel (20) einen Träger (21) mit einer an dem Träger (21) vorgesehenen Spiegelschicht (28) umfasst,
**dadurch gekennzeichnet, dass**
der Träger (21) einen flächigen Grundkörper aufweist, welcher im Bereich eines Durchtrittsfensters (23) für die Röntgenstrahlung (19) eine Aussparung (23) aufweist, und dass eine den flächigen Grundkörper und die Aussparung (23) an einer Außenseite des Trägers (21) überdeckende Folie (22) die Spiegelschicht (28) bildet, und dass die Folie (22) auf dem Träger (21) aufgeklebt ist und spannungsfrei die Aussparung (23) des Trägers (21) überdeckt.

2. Optischer Spiegel nach Anspruch 1, **dadurch gekennzeichnet, dass** die Folie (22) aus einem Kunststoff, vorzugsweise aus Polyethylenterephthalat, besteht.

3. Optischer Spiegel nach Anspruch 1 oder 2, **dadurch gekennzeichnet, dass** die Folie (22) metallisiert ist.

4. Optischer Spiegel nach Anspruch 3, **dadurch gekennzeichnet, dass** die Folie (22) eine Beschichtung aus Aluminium aufweist.

5. Optischer Spiegel nach einem der vorangehenden Ansprüche, **dadurch gekennzeichnet, dass** die Folie (22) eine Stärke in einem Bereich von wenigen Mikrometern aufweist.

6. Optischer Spiegel nach einem der vorangehenden Ansprüche, **dadurch gekennzeichnet, dass** der flächenförmige Grundkörper des Trägers(21) aus Glas besteht, welcher im Bereich des Durchtrittsfensters (23) die Aussparung, vorzugsweise ein rundes Loch, aufweist.

7. Röntgenfluoreszenzanalysegerät mit einer Röntgenquelle (10) zur Bestrahlung einer Probe (15) mit Röntgenstrahlung (19), einem Röntgendetektor (17) zur Messung von der Probe abgestrahlter Röntgenfluoreszenzstrahlung (16) und einer Kamera (25) zur Erzeugung einer optischen Kontrollabbildung (26) der bestrahlten Stelle der Probe (15) über einen schräg im Strahlengang der Röntgenquelle (10) angeordneten optischen Spiegel (20), der einen Träger (21) mit einer an dem Träger (21) vorgesehenen Spiegelschicht (28) umfasst, **dadurch gekennzeichnet, dass** der optische Spiegel (20) nach einem der Ansprüche 1 bis 6 ausgebildet ist.

8. Röntgenfluoreszenzanalysegerät nach Anspruch 7, **dadurch gekennzeichnet, dass** die Kamera (25) als Endoskop, vorzugsweise als Videoendoskop, ausgeführt ist.

9. Röntgenfluoreszenzanalysegerät nach Anspruch 7, **dadurch gekennzeichnet, dass** vor dem optischen Spiegel (20) eine Mono- oder Polykappillarlinse angeordnet ist.

10. Verfahren zur Röntgenfluoreszenzanalyse einer Probe (15), insbesondere zur Bestimmung der Dicken dünner Schichten, wobei die Probe (15) mit polychromatischer Röntgenstrahlung (19) aus einer Röntgenquelle (10) bestrahlt wird, wobei von der Probe (15) abgestrahlte Röntgenfluoreszenzstrahlung (16) mit einem Röntgendetektor (17) gemessen wird und wobei mit einer Kamera (25) eine optische Kontrollabbildung (26) der Messstelle (29) der Probe (15) über einen schräg im Strahlengang der Röntgenquelle (10) angeordneten optischen Spiegel (20), der einen Träger (21) mit einer an dem Träger (21) vorgesehenen Spiegelschicht (28) umfasst, erzeugt wird,
**dadurch gekennzeichnet, dass**
der optische Spiegel (20) nach einem der Ansprüche 1 bis 6 von einer Röntgenstrahlung (13) durchdrungen und ein optisches Bild von einer Messstelle (29) der Probe (15) an der Folie (22) reflektiert und von der Kamera (25) erfasst wird.

## Claims

1. Optical mirror for an x-ray fluorescence analysis device having an x-ray source (10) for the radiation of a sample (15) with x-ray radiation (19), an x-ray detector (17) for the measurement of x-ray fluorescence radiation (16) emitted by the sample and a camera (25) to generate an optical control image (26) of the radiated measurement position (29) of a sample (15) via the optical mirror (20) which is arranged at an angle in the beam path of the x-ray source (10), wherein the optical mirror (20) comprises a carrier (21) having a mirror layer (28) provided on the carrier (21),
**characterised in that** the carrier (21) has a planar base body, which has in the region of a passage window (23) a recess for the x-ray radiation (19) and **in that** a film (22) which covers the planar base body and the recess (23) on an outer side of the carrier (21) forms the mirror layer (28), and **in that** the film (22) is glued to the carrier (21) and covers the recess (23) of the carrier (21) in a tension-free manner.

2. Optical mirror according to claim 1, **characterised in that** the film (22) consists of a plastic, preferably of polyethylene terephthalate.

3. Optical mirror according to claim 1 or 2, **characterised in that** the film (22) is metallised.

4. Optical mirror according to claim 3, **characterised in that** the film (22) has a coating made from aluminium.

5. Optical mirror according to one of the preceding claims, **characterised in that** the film (22) has a thickness in a range of a few micrometres.

6. Optical mirror according to one of the preceding claims, **characterised in that** the planar base body of the carrier (21) consists of glass, which has the recess, preferably a round hole, in the region of the passage window (23).

7. X-ray fluorescence analysis device having an x-ray source (10) for the radiation of a sample (15) with x-ray radiation (19), an x-ray detector (17) for the measurement of the x-ray fluorescence radiation (16) emitted by the sample and a camera (25) to generate an optical control image (26) of the radiated position of the sample (15) via an optical mirror (20) which is arranged at an angle in the beam path of the x-ray source (10), which comprises a carrier (21) having a mirror layer (28) provided on the carrier (21), **characterised in that** the optical mirror (20) is formed according to one of claims 1 to 6.

8. X-ray fluorescence analysis device according to claim 7, **characterised in that** the camera (25) is implemented as an endoscope, preferably as a video endoscope.

9. X-ray fluorescence analysis device according to claim 8, **characterised in that** a mono- or polycapillary lens is arranged in front of the optical mirror (20).

10. Method for x-ray fluorescence analysis of a sample (15), in particular to determine the thicknesses of thin layers, wherein the sample (15) is radiated with polychromatic x-ray radiation (19) from an x-ray source (10), wherein x-ray fluorescence radiation (16) emitted by the sample (15) is measured using an x-ray detector (17) and wherein an optical control image (26) of the measurement position (29) of the sample (15) is generated using a camera (25) via an optical mirror (20) which is arranged at an angle in the beam path of the x-ray source (10) and which comprises a carrier (21) having a mirror layer (28) provided on the carrier (21),
**characterised in that**
the optical mirror (20) according to one of the claims 1 to 6 is penetrated by an x-ray radiation (13) and an optical image is reflected by a measurement position (29) of the sample (15) on the film (22) and is detected by the camera (25).

## Revendications

1. Miroir optique pour un analyseur par fluorescence X pourvu d'une source de rayons X (10) destinée à irradier un échantillon (15) avec un rayonnement X (19), d'un détecteur de rayons X (17) destiné à mesurer le rayonnement de fluorescence X (16) réémis par l'échantillon, et d'une caméra (25) destinée à produire une représentation de contrôle optique (26) du point de mesure (29) irradié d'un échantillon (15) par l'intermédiaire du miroir optique (20) disposé de manière inclinée dans le trajet des rayons de la source de rayons X (10), le miroir optique (20) comprenant un support (21) pourvu d'une couche réfléchissante (28) prévue sur ledit support (21), **caractérisé en ce que** le support (21) présente un corps de base plan qui présente un évidement (23) dans la zone d'une fenêtre de passage (23) pour le rayonnement X (19), et **en ce qu'**un film (22) recouvrant le corps de base plan et l'évidement (23) ménagé sur une face extérieure du support (21) forme la couche réfléchissante (28), et **en ce que** le film (22) est collé sur le support (21) et recouvre l'évidement (23) du support (21) sans exercer de contraintes.

2. Miroir optique selon la revendication 1, **caractérisé en ce que** le film (22) est réalisé en une matière plastique, de préférence en polyéthylène-téréphtalate.

3. Miroir optique selon la revendication 1 ou 2, **caractérisé en ce que** le film (22) est métallisé.

4. Miroir optique selon la revendication 3, **caractérisé en ce que** le film (22) présente un revêtement en aluminium.

5. Miroir optique selon l'une quelconque des revendications précédentes, **caractérisé en ce que** le film (22) présente une épaisseur située dans une plage de quelques micromètres.

6. Miroir optique selon l'une quelconque des revendications précédentes, **caractérisé en ce que** le corps de base plan du support (21) est réalisé en verre et présente l'évidement, de préférence un trou rond, dans la zone de la fenêtre de passage (23).

7. Analyseur par fluorescence X pourvu d'une source de rayons X (10) destinée à irradier un échantillon (15) avec un rayonnement X (19), d'un détecteur de rayons X (17) destiné à mesurer le rayonnement de fluorescence X (16) réémis par l'échantillon, et d'une caméra (25) destinée à produire une représentation de contrôle optique (26) du point irradié d'un échantillon (15) par l'intermédiaire d'un miroir optique (20) qui est disposé de manière inclinée dans le trajet des rayons de la source de rayons X (10) et qui comprend un support (21) pourvu d'une couche réfléchissante (28) prévue sur ledit support (21), **caractérisé en ce que** le miroir optique (20) est réalisé selon l'une quelconque des revendications 1 à 6.

8. Analyseur par fluorescence X selon la revendication 7, **caractérisé en ce que** la caméra (25) est réalisée en tant qu'endoscope, de préférence en tant que vidéo-endoscope.

9. Analyseur par fluorescence X selon la revendication 7, **caractérisé en ce qu'**une lentille monocapillaire ou polycapillaire est disposée devant le miroir optique (20).

10. Procédé destiné à analyser un échantillon (15) par fluorescence X, en particulier destiné à déterminer les épaisseurs de couches minces, l'échantillon (15) étant irradié avec un rayonnement X (19) polychromatique provenant d'une source de rayons X (10), le rayonnement de fluorescence X (16) réémis par l'échantillon (15) étant mesuré grâce à un détecteur de rayons X (17), et une représentation de contrôle optique (26) du point de mesure (29) de l'échantillon (15) étant produite par une caméra (25) par l'intermédiaire d'un miroir optique (20) qui est disposé de manière inclinée dans le trajet des rayons de la source de rayons X (10) et qui comprend un support (21) pourvu d'une couche réfléchissante (28) prévue sur ledit support (21), **caractérisé en ce que** le miroir optique (20) réalisé selon l'une quelconque des revendications 1 à 6 est traversé par un rayonnement X (13) et qu'une image optique d'un point de mesure (29) de l'échantillon (15) est réfléchie au niveau du film (22) et est saisie par la caméra (25) .
